# FASCICULE DE BREVET EUROPEEN

(11) **EP 4 081 422 B1**
(45) Date de publication et mention de la délivrance du brevet: **07.02.2024**
(21) Numéro de dépôt: 20851229.3
(22) Date de dépôt: 23.12.2020
(51) Int. Cl.: B60N 2/72, B60N 2/70

(54) **NAPPE DE SUSPENSION ALLÉGÉE D'UN SIÈGE DE VÉHICULE**
LEICHTE AUFHÄNGUNGSSCHICHT FÜR EINEN FAHRZEUGSITZ
LIGHTWEIGHT SUSPENSION LAYER FOR A VEHICLE SEAT

(30) Priorité: 26.12.2019 FR 1915611
(43) Date de publication de la demande: 02.11.2022
(73) Titulaire: Renault s.a.s, 92100 Boulogne Billancourt (FR); Comatel Casuel, 01350 Beon (FR)
(72) Inventeur: BARRIERE, Hervé, 28410 Saint-Lubin-de-la-Haye (FR); REMACLE, Henri, 93330 Neuilly sur Marne (FR); SOUVILLE, Philippe, 78180 Montigny le Bretonneux (FR)
(74) Mandataire: Ipsilon
(86) Numéro de dépôt international: PCT/FR2020/052619
(87) Numéro de publication internationale: WO 2021/130459

(56) Documents cités:
- DE-A1-102012 020 711
- DE-U1-202016 001 000
- FR-A1- 2 901 752

## Description

La présente invention concerne une nappe de suspension allégée d'un siège de véhicule.

Un siège de véhicule comprend généralement une assise et un dossier, ainsi qu'une nappe de suspension placée dans l'assise et servant à assouplir l'assise lorsqu'une personne est assise sur ledit siège.

Actuellement, l'assise possède une structure comprenant une traverse avant et une traverse arrière qui sont parallèles, et la nappe de suspension possède des fils métalliques qui viennent s'accrocher aux deux traverses.

La demande FR3008874 se rapporte à un siège de véhicule comprenant une armature rigide destinée à être fixée audit véhicule et au moins un élément de suspension présentant une raideur qui varie en fonction d'un allongement de l'élément de suspension. Le siège comprend en outre des moyens permettant de régler la tension de l'élément de suspension.

La demande FR 2901752 divulgue une nappe de suspension d'une assise de siège de véhicule, comprenant un film plastique, un élément d'accrochage avant et un élément d'accrochage arrière surmoulés dans ledit film.

Une nappe de suspension selon l'invention est allégée et présente des éléments d'accrochage à l'assise qui sont fiables et sûrs, tout en étant simplifiés.

L'invention a pour objet une nappe de suspension d'une assise d'un siège de véhicule.

Selon l'invention, la nappe comprend un film plastique, un élément d'accrochage avant et un élément d'accrochage arrière surmoulés dans ledit film, l'élément d'accrochage arrière comprenant une barre le long de laquelle émerge au moins un segment incurvé délimitant partiellement un canal interne cylindrique, une extrémité libre dudit segment présentant un bourrelet s'étendant le long dudit segment et saillant à l'intérieur de celui-ci de manière à réduire la section transversale dudit canal interne. Le segment incurvé a un profil en arc de cercle, dont les dimensions sont légèrement supérieures à celles d'une barre cylindrique d'une structure d'assise du siège autour de laquelle est destiné à venir se placer le segment. Chaque segment est constitué par une paroi cylindrique ouverte présentant donc une ouverture. La présence du bourrelet a pour objet de diminuer cette ouverture par laquelle la barre est destinée à être insérée, de manière à réaliser cette insertion au prix d'un certain effort. Une fois que la barre a pénétré dans le segment incurvé au-delà du bourrelet, elle se retrouve piégée dans ledit segment incurvé et la nappe se retrouve solidement arrimé à la structure d'assise. C'est la présence de ce bourrelet qui permet l'insertion de la barre par encliquetage. Avantageusement, l'élément d'accrochage avant et l'élément d'accrochage arrière sont en matière plastique.

Selon une caractéristique possible de l'invention, ledit au moins un segment comprend une première extrémité s'étendant le long de la barre et par laquelle il est solidarisé à ladite barre, ledit segment comprenant une deuxième extrémité libre qui est parallèle à ladite première extrémité et le bourrelet étant situé le long de ladite deuxième extrémité. La première extrémité et la deuxième extrémité sont matérialisées par deux bords rectilignes et parallèles, le bord matérialisant la première extrémité étant en contact avec la barre et le bord matérialisant la deuxième extrémité supportant le bourrelet. L'ouverture délimitée par les deux bords est réduite par la présence du bourrelet.

Selon une caractéristique possible de l'invention, ledit au moins un segment est incurvé sur plus de 180°. De cette manière, le segment est apte à venir enserrer étroitement la barre cylindrique de la structure d'assise.

Selon une caractéristique possible de l'invention, quatre segments incurvés et alignés émergent de la barre, dont deux segments courts sont placés aux extrémités de la barre et dont deux segments longs occupent une zone centrale de ladite barre. La présence de quatre segments correspond à une configuration particulière qui convient bien à une nappe de suspension selon l'invention, mais qui n'est nullement limitative par rapport à ladite nappe. En effet, l'élément d'accrochage arrière peut comprendre moins de quatre segments ou plus de quatre segments.

Selon une caractéristique possible de l'invention, la barre de l'élément d'accrochage arrière comprend un profil d'accrochage d'un garnissage d'assise. Puisque la nappe de suspension est légère et qu'elle laisse subsister quelques espaces disponibles, il peut être judicieux d'utiliser ces espaces pour y placer différentes pièces ayant des fonctions de support et/ou d'accrochage. Le profil d'accrochage du garnissage d'assise peut être réalisé dans un matériau qui est différent de celui de la barre ou bien peut venir de matière avec ladite barre.

Selon une caractéristique possible de l'invention, l'élément d'accrochage arrière comprend des moyens de fixation d'au moins un câblage. Puisque la nappe de suspension est légère et qu'elle laisse subsister quelques espaces disponibles, il peut être judicieux d'utiliser ces espaces pour y placer différentes pièces ayant des fonctions de support et/ou d'accrochage. Ces moyens de fixation peuvent par exemple être représentés par des agrafes, des vis ou des clips.

Selon une caractéristique possible de l'invention, l'élément d'accrochage avant comprend une deuxième barre le long de laquelle émergent au moins deux crochets. Ces crochets sont amenés à être insérés dans des orifice d'une bosse anti sous-marinage de la structure d'assise.

Selon une caractéristique possible de l'invention, l'élément d'accrochage avant comprend quatre crochets régulièrement espacés le long de la deuxième barre. La présence de quatre crochets est un bon compromis entre une bonne fixation de la nappe de suspension à la bosse anti sous-marinage et un nombre raisonnable de crochets pour assurer cette fixation.

L'invention a pour autre objet une assise de siège comprenant une traverse arrière comportant une barre cylindrique, une barre anti sous-marinage placée à l'avant de ladite assise et une nappe de suspension conforme à l'invention.

Selon l'invention, chaque segment incurvé de l'élément d'accrochage arrière sont encliquetés sur la barre cylindrique de la traverse arrière, les crochets étant insérés dans des orifices de la barre anti sous-marinage et le film plastique étant sous tension mécanique. L'élément d'accrochage avant et l'élément d'accrochage arrière sont configurés pour permettre une fixation de la nappe de suspension à une structure d'assise en mettant le film plastique sous tension mécanique. En effet, une spécificité d'une nappe de suspension selon l'invention est que le film plastique est tendu afin de permettre à ladite nappe de parfaitement jouer son rôle d'amortissement pour une personne qui serait assise sur le siège.

L'invention a pour autre objet un procédé de montage d'une nappe de suspension conforme à l'invention, dans une assise d'un siège de véhicule conforme à l'invention.

Selon l'invention, le procédé comprend les étapes suivantes :
- une étape d'insertion de chaque crochet de l'élément d'accrochage avant dans un orifice de la barre anti sous-marinage,
- une étape de mise sous tension mécanique du film plastique de la nappe de suspension,
- une étape d'encliquetage de chaque segment incurvé de l'élément d'accrochage arrière sur la barre cylindrique de la traverse arrière, le film plastique de la nappe de suspension étant maintenu sous tension mécanique lors de cette étape d'encliquetage.

Le but d'un tel procédé est d'assurer une fixation robuste de la nappe de suspension à une structure d'assise, tout en permettant de mettre sous tension le film plastique.

Une nappe de suspension selon l'invention présente l'avantage d'être légère et de posséder une structure simplifiée par rapport aux nappes existantes et impliquant des fils métalliques, tout en demeurant facile à monter sur une assise de siège. En effet, une fixation de l'élément d'accrochage arrière sur un tube cylindrique de la structure d'assise s'effectue par encliquetage qui est l'assurance d'une grande fiabilité et d'une bonne précision de montage de la nappe de suspension sur la structure d'assise.

On donne ci-après, une description détaillée d'un mode de réalisation préféré d'une nappe de suspension selon l'invention en se référant aux figures suivantes :
[Fig. 1] représente une vue en perspective d'une nappe de suspension selon l'invention,
[Fig. 2] représente une vue de côté d'un élément d'accrochage arrière d'une nappe de suspension selon l'invention,
[Fig. 3] représente une vue de côté d'un élément d'accrochage avant d'une nappe de suspension selon l'invention,

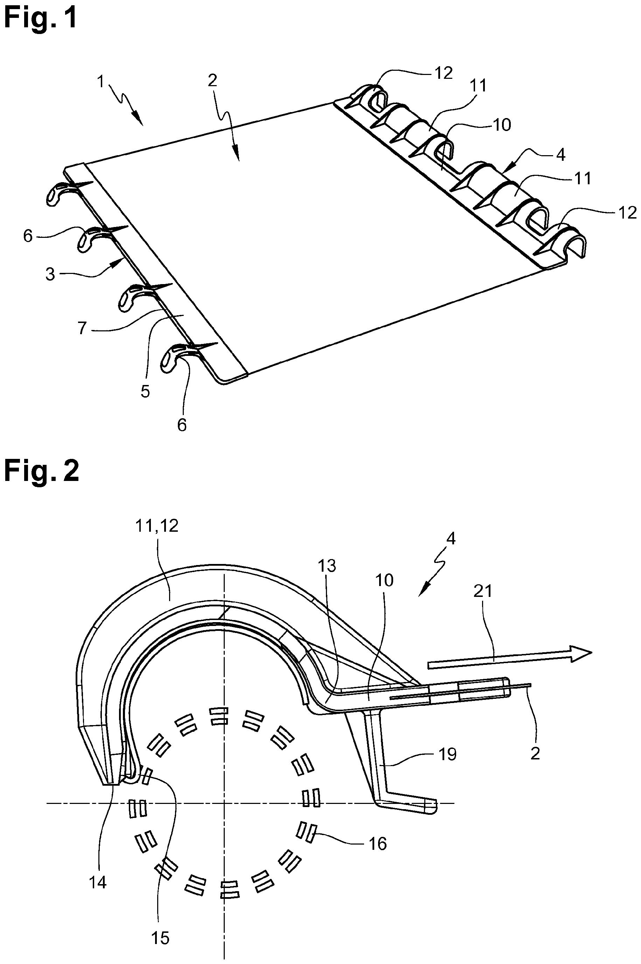

En se référant à la figure 1, une nappe de suspension 1 selon l'invention comprend un film plastique 2 de suspension de forme rectangulaire, un élément d'accrochage avant 3 et un élément d'accrochage arrière 4, lesdits deux éléments 3, 4 étant surmoulés dans ledit film plastique 2.

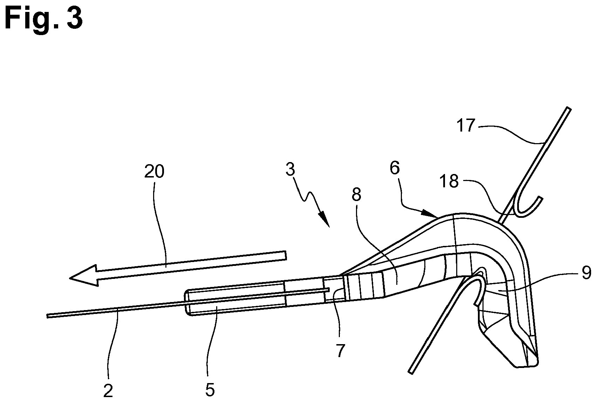

En se référant aux figures 1 et 3, l'élément d'accrochage avant 3 comprend une barre 5 de faible épaisseur dotée de quatre crochets 6 régulièrement espacés le long de ladite barre 5. La barre 5 et les crochets 6 représentent une seule et même pièce préférentiellement obtenue par moulage. Autrement dit, la barre 5 et les crochets 6 sont préférentiellement réalisés dans le même matériau, qui peut par exemple être un polymère. Lorsque la barre 5 est fixée au film plastique 2, elle présente un bord longitudinal extérieur 7 et les crochets 6 prennent naissance sur ledit bord 7 en saillant vers l'extérieur de la nappe de suspension 1. En d'autres termes, les crochets 6 sont placés d'un côté de la barre 5 et le film plastique 2 est placé de l'autre côté de ladite barre 5.

En se référant à la figure 3, chaque crochet 6 présente un premier tronçon 8 sensiblement rectiligne et un deuxième tronçon 9 sensiblement rectiligne, ledit deuxième tronçon 9 prolongeant ledit premier tronçon 8 dans une direction qui est sensiblement perpendiculaire à un axe longitudinal dudit premier tronçon 8. Le premier tronçon 8 est intercalé entre la barre 5 et le deuxième tronçon 9.

En se référant aux figures 1 et 2, l'élément d'accrochage arrière 4 comprend une barre 10 de faible épaisseur dotée de quatre segments 11, 12 incurvés, dont deux segments 11 sont identiques et allongés et dont deux segments 12 sont identiques et raccourcis. Les segments 11, 12 sont répartis le long de la barre 10 de sorte que les deux segments raccourcis 12 soient placés aux deux extrémités de ladite barre 10 considérées suivant un axe longitudinal de ladite barre 10, lesdits deux segments raccourcis 12 encadrant les deux segments allongés 11.

En se référant à la figure 2, chaque segment 11, 12 est délimité par deux bords longitudinaux 13, 14 parallèles, dont un premier bord 13 est solidarisé à la barre 10 et dont un deuxième bord 14 correspond à une extrémité libre dudit segment 11, 12. Chaque segment 11, 12 comprend ainsi une paroi incurvée s'étendant entre le premier bord 13 et le deuxième bord 14, de sorte que sur une section transversale du segment 11, 12 la paroi définit un arc de cercle, qui s'étend entre lesdits deux bords 13, 14 préférentiellement sur plus de 180°. Le deuxième bord 14 présente un bourrelet 15 longitudinal s'étendant à l'intérieur du segment 11, 12 sur toute la longueur dudit segment 11, 12, la longueur étant la dimension du segment 11, 12 considérée le long de l'axe de rotation dudit segment 11, 12. La présence du bourrelet 15 a tendance à diminuer l'ouverture de chaque segment 11, 12 délimitée par le premier bord 13 et le deuxième bord 14, car ledit bourrelet 15 saille vers l'intérieur du segment 11, 12. Lorsque la barre 10 est fixée au film plastique 2, elle présente un bord longitudinal extérieur 15 et les segments 11, 12 prennent naissance sur ledit bord 15 en saillant vers l'extérieur de la nappe de suspension 1. En d'autres termes, les segments sont placés d'un côté de la barre 10 et le film plastique 2 est placé de l'autre côté de ladite barre 10.

En se référant à la figure 1, les deux éléments d'accrochage 3, 4 sont surmoulés dans le film plastique 2, de sorte que les deux barres 5, 10 qui les composent soient parallèles et positionnées le long de deux bords parallèles dudit film plastique 2. Le film plastique 2 peut par exemple être réalisé en polyester, tel que du PBT (Polytéréphtalate de butylène).

Un procédé de montage d'une nappe 1 de suspension conforme à l'invention dans une structure d'assise d'un siège de véhicule, comprenant une traverse arrière dotée d'une barre cylindrique 16, et une barre anti sous-marinage 17 placée à l'avant de l'assise, comprend les étapes suivantes :
- une étape d'insertion de chaque crochet 6 de l'élément d'accrochage avant 3 dans un orifice de la barre anti sous-marinage 17,
- une étape de mise sous tension mécanique du film plastique 2 de la nappe de suspension 1 dans le sens indiqué par la flèche 20 de la figure 3,
- une étape d'encliquetage de chaque segment incurvé 11, 12 de l'élément d'accrochage arrière 4 sur la barre cylindrique 16 de la traverse arrière, le film plastique 2 de la nappe de suspension 1 étant maintenu sous tension mécanique lors de cette étape d'encliquetage comme l'indique la flèche 21 de la figure 2.

Il est à préciser que les bords 18 de la paroi de la barre anti sous-marinage 17 délimitant les orifices sont arrondis, afin d'empêcher qu'il ne puisse entailler voire couper, les crochets 6 qui seraient insérés dans lesdits orifices.

Il est à noter que puisque la nappe de suspension 1 est allégée, il peut être intéressant d'incorporer sur l'élément d'accrochage avant 3 et/ou sur l'élément d'accrochage arrière 4, différentes pièces pouvant servir à fixer, guider ou supporter des objets pouvant se trouver à proximité immédiate d'un siège ou même constituer ledit siège. A ce titre, l'élément d'accrochage arrière 4 peut par exemple comprendre un profil d'accrochage 19 d'une garniture d'assise comme illustré à la figure 2. Mais ces pièces peuvent également être constituées par des agrafes, des orifices, des protubérances ou des creux.

## Revendications

1. Nappe de suspension (1) d'une assise d'un siège de véhicule, **caractérisée en ce qu'**elle comprend un film plastique (2), un élément d'accrochage avant (3) et un élément d'accrochage arrière (4) surmoulés dans ledit film (2), et **en ce que** l'élément d'accrochage arrière (4) comprend une barre (10) le long de laquelle émerge au moins un segment (11, 12) incurvé délimitant partiellement un canal interne cylindrique, une extrémité libre (14) dudit segment (11, 12) présentant un bourrelet (15) s'étendant le long dudit segment (11, 12) et saillant à l'intérieur de celui-ci de manière à réduire la section transversale dudit canal interne.

2. Nappe de suspension selon la revendication 1, **caractérisée en ce que** ledit au moins un segment (11, 12) comprend une première extrémité (13) s'étendant le long de la barre (10) et par laquelle il est solidarisé à ladite barre (10), et **en ce qu'**il comprend une deuxième extrémité libre (14) qui est parallèle à ladite première extrémité (13), le bourrelet (15) étant situé le long de ladite deuxième extrémité (14).

3. Nappe de suspension selon la revendication 1, **caractérisée en ce que** ledit au moins un segment (11, 12) est incurvé sur plus de 180°.

4. Nappe de suspension selon l'une quelconque des revendications 1 à 3, **caractérisée en ce que** quatre segments (11, 12) incurvés et alignés émergent de la barre (10), dont deux segments courts (12) sont placés aux extrémités de la barre (10) et dont deux segments longs occupent une zone centrale de ladite barre (10).

5. Nappe de suspension selon l'une quelconque des revendications 1 à 4, **caractérisée en ce que** la barre (10) de l'élément d'accrochage arrière (4) comprend un profil d'accrochage (19) d'un garnissage d'assise.

6. Nappe de suspension selon l'une quelconque des revendications 1 à 5, **caractérisé en ce que** l'élément d'accrochage arrière (4) comprend des moyens de fixation d'au moins un câblage.

7. Nappe de suspension selon l'une quelconque des revendications 1 à 6, **caractérisée en ce que** l'élément d'accrochage avant (3) comprend une deuxième barre (5) le long de laquelle émergent au moins deux crochets (6).

8. Nappe de suspension selon la revendication 7, **caractérisée en ce que** l'élément d'accrochage avant (3) comprend quatre crochets (6) régulièrement espacés le long de la deuxième barre (5).

9. Assise de siège comprenant une traverse arrière comportant une barre cylindrique (16), une barre anti sous-marinage (17) placée à l'avant de ladite assise et une nappe de suspension (1) conforme à l'une quelconque des revendications 1 à 8, **caractérisée en ce que** chaque segment incurvé (11, 12) de l'élément d'accrochage arrière (4) sont encliquetés sur le barre cylindrique (16) de la traverse arrière, et **en ce que** les crochets (6) sont insérés dans des orifices (18) de la barre anti sous-marinage (17), le film plastique (2) étant sous tension mécanique.

10. Procédé de montage d'une nappe de suspension (1) conforme à l'une quelconque des revendications 1 à 8, dans une assise d'un siège de véhicule conforme à la revendication 9, **caractérisé en ce qu'**il comprend les étapes suivantes :
- une étape d'insertion de chaque crochet (6) de l'élément d'accrochage avant (3) dans un orifice (18) de la barre anti sous-marinage (17),
- une étape de mise sous tension mécanique du film plastique (2) de la nappe de suspension (1),
- une étape d'encliquetage de chaque segment incurvé (11, 12) de l'élément d'accrochage arrière (4) sur la barre cylindrique (16) de la traverse arrière, le film plastique (2) de la nappe de suspension (1) étant maintenu sous tension mécanique lors de cette étape d'encliquetage.

## Patentansprüche

1. Aufhängungsschicht (1) für ein Sitzteil eines Fahrzeugsitzes, **dadurch gekennzeichnet, dass** sie eine Kunststofffolie (2), ein vorderes Eingriffselement (3) und ein hinteres Eingriffselement (4), die in die Folie (2) eingeformt sind, beinhaltet und dass das hintere Eingriffselement (4) eine Stange (10) beinhaltet, entlang derer mindestens ein gekrümmtes Segment (11, 12) vorsteht, das teilweise einen zylindrischen Innenkanal abgrenzt, wobei ein freies Ende (14) des Segments (11, 12) einen Wulst (15) aufweist, der sich entlang des Segments (11, 12) erstreckt und auf dessen Innenseite vorspringt, sodass er den Querschnitt des Innenkanals verringert.

2. Aufhängungsschicht nach Anspruch 1, **dadurch gekennzeichnet, dass** das mindestens eine Segment (11, 12) ein erstes Ende (13) beinhaltet, das sich entlang der Stange (10) erstreckt und durch das es mit der Stange (10) fest verbunden ist, und dass es ein zweites freies Ende (14) beinhaltet, das zu dem ersten Ende (13) parallel ist, wobei sich der Wulst (15) entlang des zweiten Endes (14) befindet.

3. Aufhängungsschicht nach Anspruch 1, **dadurch gekennzeichnet, dass** das mindestens eine Segment (11, 12) über mehr als 180° gekrümmt ist.

4. Aufhängungsschicht nach einem beliebigen der Ansprüche 1 bis 3, **dadurch gekennzeichnet, dass** von der Stange (10) vier gekrümmte und nebeneinander angeordnete Segmente (11, 12) vorstehen, von denen zwei kurze Segmente (12) an den Enden der Stange (10) angeordnet sind und von denen zwei lange Segmente einen mittleren Bereich der Stange (10) einnehmen.

5. Aufhängungsschicht nach einem beliebigen der Ansprüche 1 bis 4, **dadurch gekennzeichnet, dass** die Stange (10) des hinteren Eingriffselements (4) ein Eingriffsprofil (19) für eine Sitzteilpolsterung beinhaltet.

6. Aufhängungsschicht nach einem beliebigen der Ansprüche 1 bis 5, **dadurch gekennzeichnet, dass** das hintere Eingriffselement (4) Befestigungsmittel für mindestens eine Verkabelung beinhaltet.

7. Aufhängungsschicht nach einem beliebigen der Ansprüche 1 bis 6, **dadurch gekennzeichnet, dass** das vordere Eingriffselement (3) eine zweite Stange (5) beinhaltet, entlang derer mindestens zwei Haken (6) vorstehen.

8. Aufhängungsschicht nach Anspruch 7, **dadurch gekennzeichnet, dass** das vordere Eingriffselement (3) vier Haken (6) beinhaltet, die entlang der zweiten Stange (5) regelmäßig voneinander beabstandet sind.

9. Sitzteil eines Sitzes, das einen hinteren Querträger mit einer zylindrischen Stange (16), eine Anti-Submarining-Stange (17), die vorne an dem Sitzteil angeordnet ist, und eine Aufhängungsschicht (1) nach einem beliebigen der Ansprüche 1 bis 8 beinhaltet, **dadurch gekennzeichnet, dass** jedes gekrümmte Segment (11, 12) des hinteren Eingriffselements (4) auf der zylindrischen Stange (16) des hinteren Querträgers eingerastet ist und dass die Haken (6) in Öffnungen (18) der Anti-Submarining-Stange (17) eingeführt sind, wobei die Kunststofffolie (2) unter mechanischer Spannung steht.

10. Verfahren zur Montage einer Aufhängungsschicht (1) nach einem beliebigen der Ansprüche 1 bis 8 in ein Sitzteil eines Fahrzeugsitzes nach Anspruch 9, **dadurch gekennzeichnet, dass** es die folgenden Schritte beinhaltet:
- einen Schritt des Einführens jedes Hakens (6) des vorderen Eingriffselements (3) in eine Öffnung (18) der Anti-Submarining-Stange (17),
- einen Schritt des mechanischen Unter-Spannung-Setzens der Kunststofffolie (2) der Aufhängungsschicht (1),
- einen Schritt des Einrastens jedes gekrümmten Segments (11, 12) des hinteren Eingriffselements (4) auf der zylindrischen Stange (16) des hinteren Querträgers, wobei die Kunststofffolie (2) der Aufhängungsschicht (1) während dieses Einrastschrittes unter mechanischer Spannung gehalten wird.

## Claims

1. Suspension sheet (1) for a vehicle seat cushion, **characterized in that** it comprises a plastic film (2), a front attachment element (3) and a rear attachment element (4) that are overmoulded in said film (2), and **in that** the rear attachment element (4) comprises a bar (10) along which at least one curved segment (11, 12) emerges and partially delimits a cylindrical inner channel, a free end (14) of said segment (11, 12) having a bead (15) extending along said segment (11, 12) and protruding inside the latter so as to reduce the cross section of said inner channel.

2. Suspension sheet according to Claim 1, **characterized in that** said at least one segment (11, 12) comprises a first end (13) which extends along the bar (10) and by which it is secured to said bar (10), and **in that** it comprises a second, free end (14) which is parallel to said first end (13), the bead (15) being situated along said second end (14).

3. Suspension sheet according to Claim 1, **characterized in that** said at least one segment (11, 12) is curved over more than 180°.

4. Suspension sheet according to any one of Claims 1 to 3, **characterized in that** four curved and aligned segments (11, 12) emerge from the bar (10), of which two short segments (12) are placed at the ends of the bar (10) and of which two long segments occupy a central zone of said bar (10).

5. Suspension sheet according to any one of Claims 1 to 4, **characterized in that** the bar (10) of the rear attachment element (4) comprises an attachment profile (19) for a cushion lining.

6. Suspension sheet according to any one of Claims 1 to 5, **characterized in that** the rear attachment element (4) comprises means for fastening at least one wiring assembly.

7. Suspension sheet according to any one of Claims 1 to 6, **characterized in that** the front attachment element (3) comprises a second bar (5) along which at least two hooks (6) emerge.

8. Suspension sheet according to Claim 7, **characterized in that** the front attachment element (3) comprises four hooks (6) regularly spaced along the second bar (5).

9. Seat cushion comprising a rear crossmember comprising a cylindrical bar (16), an anti-submarining bar (17) placed at the front of said cushion and a suspension sheet (1) according to any one of Claims 1 to 8, **characterized in that** each curved segment (11, 12) of the rear attachment element (4) is snap-fastened onto the cylindrical bar (16) of the rear crossmember, and **in that** the hooks (6) are inserted into orifices (18) in the anti-submarining bar (17), the plastic film (2) being under mechanical tension.

10. Method for mounting a suspension sheet (1) according to any one of Claims 1 to 8 in a vehicle seat cushion according to Claim 9, **characterized in that** it comprises the following steps:
- a step of inserting each hook (6) of the front attachment element (3) into an orifice (18) in the anti-submarining bar (17),
- a step of placing the plastic film (2) of the suspension sheet (1) under mechanical tension,
- a step of snap-fastening each curved segment (11, 12) of the rear attachment element (4) onto the cylindrical bar (16) of the rear crossmember, the plastic film (2) of the suspension sheet (1) being held under mechanical tension during this snap-fastening step.
